Europäisches Patentamt

European Patent Office

Office européen des brevets

(11) Publication number: **0 073 555**
**B1**

(12) **EUROPEAN PATENT SPECIFICATION**

(45) Date of publication of patent specification: 01.03.89

(51) Int. Cl.⁴: **H 01 G 1/01**

(21) Application number: **82302685.1**

(22) Date of filing: **25.05.82**

(54) Metallized capacitor with improved bilayer electrodes.

(30) Priority: **24.08.81 US 295928**

(43) Date of publication of application:
**09.03.83 Bulletin 83/10**

(45) Publication of the grant of the patent:
**01.03.89 Bulletin 89/09**

(84) Designated Contracting States:
**CH DE FR GB IT LI SE**

(56) References cited:
**DE-A-2 359 432**
**DE-C- 708 421**
**FR-A-2 353 122**
**FR-A-2 376 505**

(73) Proprietor: **Bolmet Incorporated**
**Louisa Viens Drive**
**Dayville, CT. 06241 (US)**

(72) Inventor: **Yializis, Angelo**
**7939 Jacobie Road**
**So Glens Falls New York 12801 (US)**

(74) Representative: **Warcoin, Jacques et al**
**Cabinet Régimbeau 26, avenue Kléber**
**F-75116 Paris (FR)**

Courier Press, Leamington Spa, England.

**Description**

Background of the Invention

This invention relates to metallized alternating current (AC) capacitors and more particularly to a high stress metallized capacitor with electrodes which comprise multiple thin metal layers of dissimilar metals laid down on a dielectric strip.

Description of the Prior Art

A metallized capacitor is one in which one or both electrodes are provided by means of a very thin metallic layer on a solid dielectric strip, a common example being a vapor deposited aluminum layer on a polypropylene resin strip. These strips may be wound together in roll form to provide an electrical capacitor with metallized electrodes and polypropylene dielectrics. The roll may be placed in a container and suitably impregnated with a dielectric liquid. It may also be suitably encapsulated and used in the dry state, or, placed in a container wherein only the roll ends are exposed to a dielectric liquid. This latter capacitor may be referred to as a semi or incompletely impregnated capacitor and it is the semi-impregnated or dry type of capacitor to which this invention is primarily directed. One example of such a capacitor, which utilizes a small amount of fluid, is disclosed and claimed in U.S. Patent 3,987,348-Flanagan et al.

In the normal operation of metallized electrical capacitors, particularly those rated above about 250 volts AC there are two significant deleterious operating deficiencies denoted, (a) clearings and (b) corrosion, which effect the operation and life of the capacitor. The clearing operation is repetitive over the life of a capacitor and is related to a deficiency in the dielectric which may cause certain electrical discharges such as corona to be generated between electrodes. In prior capacitors with self-supporting aluminum foil electrodes, these discharges may eventually erode, cross over or penetrate the solid dielectric so that electrical short circuiting occurs between electrodes with a violent failure of the capacitor. However, in a metallized capacitor the heat of any electrical discharge across the dielectric, as described, vaporizes an increasingly larger area of the thin metal layer, thus increasing the arc length until it self-extinguishes. Alternatively described, should a dielectric fault and puncture occur in the dielectric of a metallized capacitor the very thin film of metallizing will burn back and away from the failure site, isolating the fault. But for the fact that a metallized capacitor has this inherent clearing effect, the corona discharge or arc would cause an early failure of the capacitor. However, the disadvantage of this self-clearing is an overall loss of capacitance in the capacitor through the loss of electrode area by vaporization.

Corrosion is the second factor occurring in the normal operation of metallized capacitors. This phenomenon is noted where certain areas of the thin metallized layer are converted to an oxide, e.g., aluminum oxide which is not a good electrical conductor and therefore some effective electrode area is lost. The reasons for this corrosion phenomena are unclear, but with high electrical stress and thin electrodes of aluminum, corrosion is a rapidly spreading and wasting operation. This is particularly found in AC capacitors when the voltage stress on a polypropylene dielectric film is on the order of above about 30 volts per μm.

Since metallized capacitors may lose as much as 10% of their capacity over a relatively short period of time because of these factors, they become unacceptable for some applications, and they may require a considerable uneconomic design for compensatory purposes. Also the loss of capacitance of a capacitor may pose as a possible source of host equipment failure because of capacitance loss in the capacitor.

The loss of capacitance due to the two deficiencies of clearings and corrosion is at present the most serious disadvantage in high stress AC metallized capacitors and a limiting factor on their useful life. The more important one of the above two deficiencies is the control of corrosion, quite apart from clearings, because corrosion is the largest contributor to loss of capacitance, and is quite independent from clearings. However, at the same time whatever is done to control corrosion should not deleteriously affect clearings, i.e., make them more violent with greater energy release. For example, the corrosion problem is not overcome merely by the use of a thicker metal electrode. A thicker metal electrode means an electrode which displays most disadvantageous delayed and violent clearing effects, a result that is counter to the primary purpose of a metallized capacitor. Thinner electrodes are more desirable, because of their favorable economics. However, the corrosion problem is not counteracted by thinner electrodes as they merely exacerbate the problem by supporting a multiplicity of unnecessary clearings. While different metals do have different corrosion rates, it is by far desirable to continue to use such proven metals as aluminum and zinc for the layer electrode and these metals are most prone to corrosion.

Since both clearings and corrosion are electrical stress and electrical field strength related, and the conductivity of the aluminum, or the thickness of the aluminum is fixed within a narrow range for effective clearing, the mere modification of corrosion effects while a distinct improvement, only permits a given high stress capacitor to operate somewhat longer, i.e., with less capacitance loss. Excessive clearings will continue to cause loss of capacitance. What is important is that both clearing effects and corrosion effects require modification for improved performance high stress capacitors. While lowering the voltage stress on the dielectric accomplishes both purposes it is grossly uneconomical to do so.

FR—A—2 376 505 relates to an electrical capacitor comprising a pair of spaced electrodes on a dielectric material strip therebetween. The electrodes comprise a composite metal coating. Said composite metal coating comprises a first metal layer on said dielectric strip and a second metal layer on said first metal layer. The thicknesses of the first and second metal layers are chosen in such a way that essentially all of the current flow is carried by the first layer and the rated voltage of the capacitor is adapted to impose a high electric stress on said dielectric. The preferred second metal layer consists of zinc while the first metal layer consists of aluminium. The second metal layer may also consist of copper, nickel, cobalt, titanium or tungsten. The Al first metal layer is at most 30 nm thick. The ratio of the second to the first metal layer is in the range of 1:2 to 1:5 preferably 1:3., The zinc layer therefore is about 6 nm to 15 nm. According to FR—A—2 376 505 the zinc layer halts the advance of corrosion at the edges and from the pores of the coating. FR—A—2 376 505 gives no indication regarding resistivity of the metal layers.

DE—C—708 421 relates also to an electrical capacitor comprising a pair of spaced electrodes on a dielectric material strip therebetween, wherein the electrodes comprise a first and a second metal layer. The preferred first metal layer is zinc. The preferred second metal layer is nickel, chromium, platinum, rhodium or iridium. DE—C—708 421 gives no indication regarding thickness or resistivity of the metal layers.

The capacitors according to FR—A—2 376 605 and DE—C—708 421 do not prevent both the previously indicated deficiences: clearings and corrosion.

### Summary of the Invention

It has now been discovered that corrosion deficiency of metallized capacitors may be significantly minimized, without adverse clearing effects, by the use of unique very thin composite, dual or bilayer of electrode metals for a single electrode design, without detracting from the desirable clearing effects. This discovery is accomplished by the use of a bimetal layer electrode of dissimilar metals as indicated in the following claims 1 and 3.

This invention will be better understood when taken in connection with the following description and the drawings in which —

FIG. 1 is an illustration of a dry metallized capacitor roll section embodying the electrode structure of this invention.

FIG. 2 is an illustration of the completed capacitor assembly utilizing the roll section of FIG. 1.

FIG. 3 is an enlarged illustration of one form of a bilayer metallized electrode structure of this invention.

FIG. 4 is a magnified photo of a prior single layer metallized film showing the effects of clearing.

FIG. 5 is a magnified photo of a typical prior single layer metallized capacitor electrode showing the effects of corrosion after a specified number of hours of operation.

### Description of Preferred Embodiments

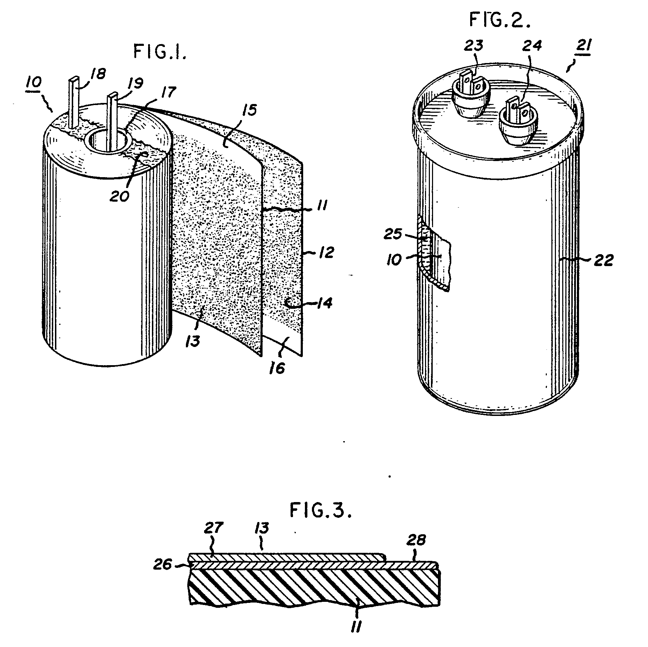

Referring now to FIG. 1 there is shown the kind of capacitor in which optimum benefits of this invention may be obtained. This capacitor utilizes structure similar to that in the noted Flanagan patent for voltages above about 370 volts and particularly above about 440 volts. In FIG. 1 there is disclosed one preferred embodiment of this invention as a capacitor roll section 10. Roll section 10 comprises a pair of dielectric material strips 11 and 12 of polypropylene which have been metallized as illustrated by metallizing surfaces or coatings 13 and 14. As is the usual practice, the strips 11 and 12 are metallized in a manner which leaves metal free margins 15 and 16 along opposite edges of roll 10. In the winding process the roll 10 is wound on a core member 17, and the strips 11 and 12 are laterally offset with respect to each other in order that each roll edge or end will display an offset with its metallized coatings exposed at the edge of the strip. Thereafter, suitable electrical leads 18 and 19 may be attached to the exposed metal coating through utilization of the well-known schooping process to provide a metal layer 20, and the roll is then placed in a can or casing as illustrated in FIG. 2.

In FIG. 2, the capacitor 21 includes a casing or can 22 which contains a single roll 10, and the leads 18 and 19 from the roll connect to the terminals 23 and 24. Casing 22 may be a sealed can type which is filled with a dielectric fluid 25 and then sealed, or it may be a protective kind of casing without any liquid impregnant. In any event it is the metallized coatings 13 and 14 of FIG. 1 to which this invention is primarily directed, and which are described with respect to FIG. 3.

Referring now to FIG. 3 the dielectric strip 11 is illustrated in sectional form as a dielectric synthetic resin, for example, polypropylene film, with a composite metal layer or coating 13 which is vapor deposited on or attached to the strip 11. As illustrated the composite layer 13 comprises a bilayer or a dual layer of metals 26 and 27. These metals generally cover the dielectric strip, or more specifically, they are continuous and coextensive with the effective capacitor electrode area of the capacitor.

The first metal layer 26 is the primary electrode layer of the capacitor. A typical metal for this layer is high purity aluminum of 99.99 aluminum. Ordinarily, such a layer may have a thickness in the range of 17,5 nm to 25 nm and corresponding resistivities of from 5 to 8 $\Omega/\square$ for this invention. Ohms/square is an acceptable measurement for evaporated metal layers of extreme thinness. This layer covers all of the strip 11 except those areas used to offset margins. The reason for this total kind of coverage arises from the fact that studies and examination of metallized capacitors indicate that corrosion is found throughout the capacitor roll, and that it may be insufficient or uneconomical to provide corrosion protection on less than all available capacitor effective electrode area surfaces.

The second layer 27 is a specific metal or a specific alloy, different from the first metal, which must have clearly defined electro chemical properties to control two functions (a) permitting the layer 26 to be made unusually and extremely thin for improved clearability and (b) controlling corrosion by its less oxidizing characteristics and its ability to remain in a substantially continuous metallic state during the operation of the capacitor. The right metal also provides a layer 27 which, when combined in thickness with the thickness of the base layer 26, will show a combined thickness less than the design thickness of a single prior art aluminum layer.

Preferred metals for the layer 27 include such metals as iron, chromium, nickel, and their alloys such as NiCr. The resistivities of these metals lie in the range of about $10^4$ to $10^{10}$ ohms per square. These metals are members of a broader class of metals defined as those having a higher melting point than the metals of the first layer and a significantly lesser high field electrochemical corrosion rate than the metals of the first layer in the same operative environment. They also display a higher resistivity than the metal of the first layer — taking its thinness into consideration, and may be deposited on the first layer in a continuous metallic state in extremely thin layers.

It is important that the second metal layer tends to remain mostly in its metallic form in the capacitor, i.e., that it does not readily convert to its oxide from exposure to air, etc. Metallic conductance is preferable although some oxide semi-conducting properties are not detrimental. Potential corrosion sites should have an overlap or roofing metal with metallic and semiconducting conductivity. Such metals as zinc, copper, etc. are not desirable because of their rapid and highly corrosive nature in very thin layers. Change or loss of capacitance is greatly minimized by the metallic conductive coating which preserves the total conducting electrode structure and concept.

While the use of alloys including aluminum and copper as a single electrode will diminish corrosion to some extent, a considerable amount of the copper is required and this adversely changes the resistivity of the electrode. The metals of layer 27 of the present invention have a higher resitivity than that of the pure aluminum and a higher melting point. Their conductivities lie generally in the range of about $10^4$ to $10^{10}$ ohms per square. During a clearing process the second layer need not melt. Their higher melting point and thinness will cause them to quickly evaporate during clearing without contributing any adverse clearing effects. By the selection of a first layer which is thinner than prior aluminum layers there is an advantageous clearing.

Preferable ratios of the thicknesses of the individual layers are that the second layer is from 1/6 to 1/12 preferably from 1/8 to 1/12 the thickness of the first layer, with a first layer thickness of less than about 25 nm. It is important to the present invention that the second layer be substantially continuous in two forms — first it must be substantially continuous over the effective electrode area and second it must be deposited as an unbroken layer in the sense that some metals when deposited in extremely thin layers, e.g. less than about 5 nm form individual islands which may not be connected physically or electrically. The reasons for the expressed thickness relationships are that it is desirable for essentially all of the current flow to be carried by the first layer and for the second layer to have a higher resistance and higher melting point.

Metallized polypropylene film with bilayers of aluminum and, nickel and/or iron, have demonstrated superior performance when compared to prior art capacitors. For example, loss of capacitance can be reduced by as much as 90% or more over the life of the capacitor, and by reason thereof the electrical stress level on the film of these capacitors can be increased above about 1200 per mil (46 volts/μm) for example, in the range of 1500 to 2000 volts per mil (82 volts/μm) and higher. At the same time, the material economics are improved by having two layers in which the combined thickness is less than the thickness of the prior single layers. Representative examples of the practices of this invention are illustrated as follows. In all examples the metal layers were deposited by means of the well known vacuum deposition process.

### Example I

In this example several capacitors were assembled following the structures of FIGS. 1, 2, and 3 with a capacity of 15 to 65 μf. The important features of this construction is the thinness of the polypropylene film, i.e., 8 μm and the thinness of the bi-layer coating. The bi-layer used in this example comprised a base layer of aluminum and a second layer of a nickel-chromium alloy, e.g. 80% Ni and 20% Cr over the aluminum layer. In all instances the aluminum layer was between about 17,5 nm and 25 nm thickness and the NiCr layer was between about 2 nm to 3 nm. The control is generally a prior art capacitor following the same general construction of other capacitors in the example but having a single aluminum layer of a thickness of about 50 nm.

Example I

| Type of Capacitor | Test Condition | Test Duration | Capacitance Loss | % of Shorts |
|---|---|---|---|---|
| Controls | 470 VAC/80°C | 1000 Hr. | 5 to 8% | 5—25% |
| High Stress Bilayer With Al/NiCR Electrodes | 470 VAC/80°C | 2000 Hr. | 0.3% | 0% |
| | 550 VAC/80°C | 2000 Hr. | 0.8% | 0% |
| | 660 VAC/80°C | 500 Hr. | 2.0% | 0% |

What is evident from Example I is that the capacitance loss with time is between about 5% to 8% for the prior art control unit and as low as 0.3 for the aluminum base layer and a nickel chrome coating. This is surprising in view of the fact that the units were tested at 470 to 660 volts and at 80°C, a most stringent set of test conditions for such a thin film dielectric system. The total thickness of the bimetal layer is markedly less than prior art thicknesses of single layers. The ordinary life of capacitors of this kind, including control capacitors, is usually more than 20,000 hours.

Example II

Another bi-layer electrode that has eliminated the high field electrochemical corrosion process in SMPP capcitors is the Al-Fe or Fe-Al bi-layer. Iron is one of the most desirable bi-layer materials because it remains physically and electrically continuous at thicknesses lower than 2 nm and in addition, it is relatively inexpensive. Al-Fe bi-layer electrode capcitors have been tested successfully at stress levels substantially higher than the control units (refer to example 1). In this example II the aluminum layer was from 20 nm to 25 nm thickness and the iron layer was from 2 μm to 3 μm thickness. The dielectric was polypropylene film of 8 nm thickness.

| Type of Capacitor | Test Condition | Test Duration | Capacitance Loss | % of Shorts |
|---|---|---|---|---|
| High Stress Bilayer With Al-Fe Electrodes | 550 VAC/80°C | 1200 Hr. | <0.5% | <10% |
| | 600 VAC/80°C | 500 Hr. | " | 0% |
| | 660 VAC/R.T. | 500 Hr. | " | 0% |

As can be seen from this Example II, the excellent low capacitance loss results of Example I are confirmed, and the capacitance loss improvement illustrated in excess of 1200 hours of life at extreme stresses and temperatures is exceptional.

In the practice of this invention it has been discovered that a significant number of capacitor failures were not dielectric or capacitance loss failures, but were actually caused by the electrical connection, (FIG. 1), of the leads or taps 18 and 19 and the metal layer 13 through the schooping material 20. In the assembly operation the strips 11 and 12 have uncoated margins 15 and 16 at each end and may also be offset at each end so that the metal layer 13 of one electrode is distinctly removed from the schooping 20 at the end. Some of the coatings 27 of this invention have been found to interfere, on a time delay basis, with the joining to the common schooping solder employed. Consequently in the preferred practice of this invention a second margin 28 FIG. 3 is utilized at the metal layer margin of strips 11. Margin 28 exposes the underlay metal of aluminum to the usual schooping process with excellent results and removes an otherwise hidden problem with these capacitors with various coating metals. In addition, the exposed aluminum layer at 28 may be made thicker for better joining characteristics. In the examples of the present invention the aluminum margin is made about two times the aluminum layer thickness.

Advantageous results are obtained when silicon oil is used in the masking part of the metal vapor deposition process because the film margins absorb a quantity of this oil for increased corona resistance at the roll ends in the finished capacitors.

Representative capacitors embodying the graded electrode feature are included in the following example.

Example III

In this example capacitors were made up as described in Example I, but with graded electrodes where the aluminum was between 20 nm to 25 nm thickness. The iron was 2 nm to 3 nm thickness and the iron layer terminated about 2 to 3 mm from the edge of the strip. At this edge the thickened or graded aluminum was 40 nm to 50 nm thick. Polypropylene film was 8 μm thickness.

| Capacitor Type | Test Condition | Test Duration | Capacitance Loss % | % of Shorts |
|---|---|---|---|---|
| High Stress Bilayer With Al-Fe Graded Electrodes | 550 VAC/100°C | 500 | <0.5% | 0% |
| | 550 VAC/−30°C | 500 | <0.5% | 0% |

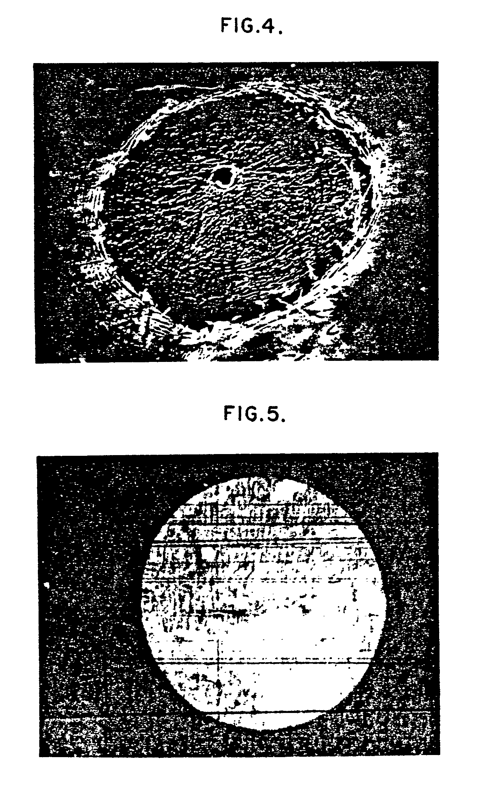

Teardown analysis of many capacitors utilizing the practices of this invention, with 8 μm thick film and voltage ratings of 550 VAC to 600 VAC show dramatic lessening effects of clearing and negligible corrosion. A clearance occurrence is illustrated in the FIG. 4 photomicrograph. The clearance is defined by central aperture or puncture and an annular clear area. The clear area is the polypropylene film from which an aluminum area has been vaporized. The use of the bi-layer of this invention neither increases nor decreases the number of clearings which take place. What a bi-layer will do is to minimize the effects of clearings such as reducing their violence or the area affected. They accomplish these purposes in one respect by means of their thinner inner layer which will be more permissive of lower energy clearances and avoid the larger and violent ones. At the same time, the outer metal layer of higher resistivity serves to implement the integrity of the outer metal layer.

In FIG. 5 there is illustrated a photomicrograph showing the effects of corrosion on an aluminum electrode surface. In this FIG. the lighter area is a spot of aluminum oxide. The darker area is aluminum metal. This oxide spot starts at the interface of the aluminum metal layer and the polypropylene film and projects completely through the metal. Consequently the metal converted is metal electrode removed from the active electrode surface. As opposed to clearings, corrosion is a growth process, and elevated temperatures, voltages, and frequencies accelerate the growth conditions.

The dual layers of this invention may be generated by well known plating, deposition, and coating processes. Vapor deposition in vacuum is a preferred process. It can provide for deposition of an alloy such as nickel chrome for simultaneous or serial deposition of different metals in the same chamber. This reduces the chances of contamination of the surfaces and limits oxidation of the metal layers during the process. Some of the second metal may be found diffused into the first metal layer. The bi-layers of this invention may be aluminum as the outer layer of metal and the layers may comprise one layer of aluminum for example on one side of a film strip and a thinner layer of iron for example on the opposite side.

An important concept of this invention is the thickness ratios of the metal layers. It has been discovered that, following the practices of this invention all thicknesses may be drastically reduced and improved benefits obtained. Many metals are excluded for this reason and significantly higher stresses can be utilized. This invention does not merely make a given capacitor operate more effectively by limiting corrosion, but in effect provides a unique, higher stressed capacitor, which also has minimal corrosion.

Since very thin second layers are used it is important to verify their continuous metallic state, as well as their metallic state after life tests of capcitor operation. Among such tests are electron transmission and auger and esca spectroscopy. Another test which has been utilized in the practice of this invention is a relative solution test where certain fluids will selectively dissolve an oxide or the base metal, and calculations will yield the process or absence of one or the other.

**Claims**

1. A metallized electrical capacitor comprising a pair of spaced electrodes and a dielectric material strip therebetween, at least one of said electrodes comprising a composite metal coating on said dielectric strip, said composite metal coating including first and second layers of different metals, wherein the thicknesses of the first and second metal layers are chosen in such a way that essentially all of the current flow is carried by the first layer and the rated voltage of the capacitor is adapted to impose a high electric stress on said dielectric, the rated voltage of said capacitor being adapted to impose a stress on said dielectric of greater than 39 volts per μm (1000 volts per mil) thickness, said first metal layer (26) having a thickness less than 25 nm and such that the resistivity corresponds to the range of 5 to 8 ohms per square, said second metal layer (27) being vapor deposited at a uniform thickness comprised between 1/6 to 1/12 the thickness of the first layer and such that the resistivity corresponds to less than $10^{10}$ ohms per square, said metal of said second metal layer (27) having a higher melting point than said metal of said first metal layer (26).

2. A metallized electrical capacitor according to claim 1, characterized in that the composite metal coating is vapor deposited on said dielectric strip (11), the rated voltage of the capacitor being in the range of 370 volts AC to 660 volts AC and said dielectric strip (11) having a thickness less than 8 μm so that the voltage stress is in the range from 46 to 82 volts per μm (1200 to 1500 volts per mil) thickness, and the total thickness of said composite metal coating (26, 27) being in the range of 20,5 nm to 28 nm and the second layer being less than 3 nm.

3. A metallized electrode strip for an electrical capacitor comprising a dielectric material strip (11) covered by at least a composite metal electrode, said composite metal electrode including first (26) and second (27) layers of different metals wherein the thicknesses of the first and second metal layers are chosen in such a way that essentially all of the current flow is carried by the first layer, said first metal layer having a thickness less than 25 nm and such that the resistivity corresponds to the range of 5 to 8 ohms per square, said second metal layer being vapor deposited at a uniform thickness comprised between 1/6 to 1/12 the thickness of the first layer and such that the resistivity corresponds to less than $10^{10}$ ohms per square, said metal of said second metal layer having a higher melting point than said metal of said first metal layer.

4. A metallized electrode strip according to claim 3 for an electrical capacitor comprising a base dielectric strip (11) of a synthetic resin material, characterized by having a first metal layer (26) covering said synthetic resin strip and extending to one longitudinal edge thereof and a second layer (27) electrically continuous on said first metal layer (26) spaced from said longitudinal edge to leave an exposed margin of said first metal therealong, the thickness of said synthetic resin strip (11) being less than 8 µm.

5. The metallized capacitor or electrode strip as recited in one of claims 1 to 4 wherein said metal layers (26, 27) are adjacent each other.

6. The metallized capacitor or electrode strip as recited in one of claims 1 to 3 wherein one of said first and second metal layers (26, 27) is deposited directly on said strip (11) and the other layer is deposited on the strip-deposited layer.

7. The metallized capacitor or electrode strip as recited in claim 6 wherein said first metal layer (26) is deposited directly on said dielectric strip (11) and said second metal layer (27) is deposited on said first metal layer (26).

8. The metallized capacitor or electrode strip as recited in clam 6 wherein said second metal layer (27) is deposited directly on said dielectric strip (11) and said first metal layer (26) is deposited on said second metal layer (27).

9. The metallized capacitor or electrode strip as recited in one of claims 1' to 8 wherein said dielectric strip (11) is a synthetic resin.

10. The metallized capacitor or electrode strip as recited in one of claims 1 to 9 wherein said dielectric strip (11) comprises polypropylene.

11. The metallized capacitor or electrode strip as recited in one of claims 1 to 10 wherein said first layer (26) comprises aluminium.

12. The metallized capacitor or electrode strip as recited in one of claims 1 to 11 wherein said second metal layer (27) is taken from the class consisting of iron, nickel, chromium.

13. The metallized capacitor or electrode strip as recited in one of claims 1 to 11 wherein said first metal layer (26) is a high purity aluminium vapor deposited on a polypropylene resin strip, and said second metal layer (27) comprises vapor deposited iron.

14. The metallized capacitor or electrode strip as recited in one of claims 1 to 13 wherein said second metal layer (27) comprises iron.

15. The metallized capacitor or electrode strip as recited in one of claims 1 to 13 wherein said second metal layer (27) comprises nickel.

16. The metallized capacitor or electrode strip as recited in one of claims 1 to 13 wherein said second metal layer (27) contains chromium.

17. The metallized capacitor or electrode strip as recited in one of claims 1 to 16 wherein said second metal layer (27) is an alloy of metals taken from the class consisting of iron, nickel and chromium.

18. The metallized capacitor or electrode strip as recited in claim 17 wherein said alloy comprises nickel-chromium.

19. An electrical capacitor according to claim 1 comprising a base polypropylene dielectric strip (11), characterized in that:

(a) said capacitor has a rated voltage adapted to impose electrical stress on said dielectric strip above 46 volts per µm thickness;

(b) said first metal layer (26) comprises aluminium;

(c) said second metal layer (27) includes at least one metal taken from the class consisting of iron, nickel and chromium; and

(d) said second metal layer (27) is electrically continuous throughout and spaced from one longitudinal edge of said strip to expose said first metal layer as a margin along said strip.

20. The capacitor as recited in claim 19 wherein the total thickness of said bilayer (26, 27) is in the range of 20,5 nm to 28 nm and the second layer is less than 3 nm.

21. The capacitor as recited in one of claims 1, 2, 19 wherein said capacitor is impregnated with a dielectric fluid.

22. The metallized capacitor or electrode strip as recited in one of claims 1 to 21 wherein said first metal layer (26) comprises aluminium and said second metal layer (27) comprises a metal taken from the class consisting of iron, nickel and chromium, one of said first and second metal layers (26, 27) being deposited on said dielectric strip and the other layer being deposited on the strip-deposited layer, and said first layer (26) extending beyond said second layer along a marginal area at one longitudinal edge of said dielectric strip (11).

23. The metallized capacitor or electrode strip as recited in claim 22 wherein the aluminium of said first metal layer (26) is deposited in said marginal area with a greater thickness than the remainder of said first layer.

24. The metallized capacitor or electrode strip as recited in one of claims 1 to 23 wherein said dielectric strip (11) is a synthetic resin strip having a thickness less than 8 µm.

**Patentansprüche**

1. Metallisierter Kondensator mit einem Paar mit Abstand voneinander angeordneten Elektroden und einem dazwischen angeordneten Streifen aus dielektrischem Werkstoff, wobei wenigstens eine Elektrode eine zusammengesetzte Beschichtung aus Metall auf dem dielektrischen Streifen umfaßt, die eine erste und eine zweite Metallschicht aus unterschiedlichen Metallen beinhaltet, wobei die Dicken der ersten und der zweiten Metallschicht so gewählt sind, daß im wesentlichen der gesamte Stromfluß von der ersten Metallschicht getragen ist, und die Nennspannung des Kondensators den dielektrischen Streifen stark elektrisch belastet, wobei weiter die Nennspannung des Kondensators den dielektrischen Streifen mit mehr als 39 V/µm (1000 volts per mil) belastet, die erste Metallschicht (26) weniger als 25 nm dick und so gestaltet ist, daß der Widerstand einem Bereich von 5 bis 8 $\Omega/mm^2$ (ohms per square) entspricht, die zweite Metallschicht (27) mittels Aufdampfung mit gleichförmiger Dicke zwischen 1/6 und 1/12 der Dicke der ersten Metallschicht aufgebracht und so gestaltet ist, daß der Widerstand geringer als $10^{10}$ $\Omega/mm^2$ (ohms per square) ist, und wobei das Metall der zweiten Metallschicht (27) einen höheren Schmelzpunkt als dasjenige der ersten Metallschicht (26) hat.

2. Kondensator nach Anspruch 1, dadurch gekennzeichnet, daß die zusammengesetzte Beschichtung auf den dielektrischen Streifen (11) aufgedampft ist, die Nennspannung des Kondensators in dem Bereich von 370 V bis 660 V (Wechselspannung) liegt und der dielektrische Streifen (11) weniger als 8 µm dick ist, so daß die Feldstärke im Bereich von 46 V/µm bis 82 V/µm (1200 bis 1500 volts per mil) liegt, und die Gesamtdicke der zusammengesetzten Beschichtung (26, 27) in einem Bereich von 20,5 nm bis 28 nm liegt, wobei die zweite Schicht weniger als 3 nm dick ist.

3. Metallisierter Elektrodenstreifen für einen Kondensator mit einem dielektrischen Streifen (11), der von mindestens einer Elektrode aus zusammengesetztem Metall bedeckt ist, wobei die Elektrode aus zusammengesetztem Metall eine erste (26) und eine zweite (27) Metallschicht aus verschiedenen Metallen umfaßt und die Dicken der beiden Metallschichten so gewählt sind, daß im wesentlichen der gesamte Stromfluß von der ersten Metallschicht getragen ist, wobei weiter die erste Metallschicht weniger als 25 nm dick ist und ihr Widerstand 5 bis 8 $\Omega/mm^2$ (ohms per square) entspricht, die zweite Metallschicht mit durchgehend gleicher Dicke zwischen 1/6 und 1/12 der Dicke der ersten Metallschicht aufgebracht und so beschaffen ist, daß der Widerstand $10^{10}$ $\Omega/mm^2$ entspricht, und das Metall der zweiten Metallschicht einen höheren Schmelzpunkt als das Metall der ersten Metallschicht hat.

4. Elektrodenstreifen nach Anspruch 3 für einen Kondensator mit einem dielektrischen Hauptstreifen (11) aus synthetischem Harz, gekennzeichnet durch eine erste Metallschicht (26), welche den Hauptstreifen aus synthetischem Harz bedeckt und sich bis zu einer Längskante desselben erstreckt, und durch eine zweite Metallschicht (27), die elektrisch an die erste Metallschicht (26) angeschlossen und von der Längskante entfernt angeordnet ist, um einen Rand der ersten Metallschicht entlang der Längskante freizulegen, wobei der Streifen (11) aus synthetischem Harz weniger als 8 µm dick ist.

5. Kondensator oder Elektrodenstreifen nach einem der Ansprüche 1 bis 4, dadurch gekennzeichnet, daß die Metallschichten (26, 27) einander benachbart angeordnet sind.

6. Kondensator oder Elektrodenstreifen nach einem der Ansprüche 1 bis 3, dadurch gekennzeichnet, daß entweder die erste oder die zweite Metallschicht (26, 27) direkt auf dem Streifen (11) angeordnet und die verbleibende Metallschicht auf der Metallschicht auf dem Streifen angeordnet ist.

7. Kondensator oder Elektrodenstreifen nach Anspruch 6, dadurch gekennzeichnet, daß die erste Metallschicht (26) direkt auf dem dielektrischen Streifen (11) und die zweite Metallschicht (27) auf der ersten Metallschicht (26) angeordnet ist.

8. Kondensator oder Elektrodenstreifen nach Anspruch 6, dadurch gekennzeichnet, daß die zweite Metallschicht (27) direkt auf dem dielektrischen Streifen (11) und die erste Metallschicht (26) auf der zweiten metallschicht (27) angeordnet ist.

9. Kondensator oder Elektrodenstreifen nach einem der Ansprüche 1 bis 8, dadurch gekennzeichnet, daß der dielektrische Streifen (11) aus synthetischem Harz ist.

10. Kondensator oder Elektrodenstreifen nach einem der Ansprüche 1 bis 9, dadurch gekennzeichnet, daß der dielektrische Streifen (11) Polypropylen beinhaltet.

11. Kondensator oder Elektrodenstreifen nach einem der Ansprüche 1 bis 10, dadurch gekennzeichnet, daß die erste Metallschicht (26) Aluminium beinhaltet.

12. Kondensator oder Elektrodenstreifen nach einem der Ansprüche 1 bis 11, dadurch gekennzeichnet, daß die zweite Metallschicht (27) aus der Gruppe Eisen, Nickel, Chrom stammt.

13. Kondensator oder Elektrodenstreifen nach einem der Ansprüche 1 bis 11, dadurch gekennzeichnet, daß die erste Metallschicht (26) hochreines, auf einem Polypropylen-Harz-Streifen aufgedampftes Aluminium ist und die zweite Metallschicht (27) aufgedampftes Eisen umfaßt.

14. Kondensator oder Elektrodenstreifen nach einem der Ansprüche 1 bis 13, dadurch gekennzeichnet, daß die zweite Metallschicht (27) Eisen umfaßt.

15. Kondensator oder Elektrodenstreifen nach einem der Ansprüche 1 bis 13, dadurch gekennzeichnet, daß die zweite Metallschicht (27) Nickel umfaßt.

16. Kondensator oder Elektrodenstreifen nach einem der Ansprüche 1 bis 13, dadurch gekennzeichnet, daß die zweite Metallschicht (27) Chrom beinhaltet.

17. Kondensator oder Elektrodenstreifen nach einem der Ansprüche 1 bis 16, dadurch gekennzeichnet, daß die zweite Metallschicht (27) eine Legierung aus Metallen der Gruppe Eisen, Nickel und Chrom ist.

18. Kondensator oder Elektrodenstreifen nach Anspruch 17, dadurch gekennzeichnet, daß die Legierung Nickel-Chrom umfaßt.

19. Kondensator nach Anspruch 1 mit einem dielektrischen Hauptstreifen (11) aus Polypropylen, dadurch gekennzeichnet, daß

(a) der Kondensator eine Nennspannung entsprechend einer elektrischen Feldstärke in dem dielektrischen Streifen von mehr als 46 V/μm hat;

(b) die erste Metallschicht (26) Aluminium beinhaltet;

(c) die zweite Metallschicht (27) wenigstens ein Metall aus der Gruppe Eisen, Nickel und Chrom beinhaltet; und

(d) die zweite Metallschicht (27) durchgehend elektrisch angeschlossen und mit Abstand von einer Längskante des Hauptstreifens angeordnet ist, um die erste Metallschicht als Rand den Hauptstreifen entlang freizulegen.

20. Kondensator nach Anspruch 19, dadurch gekennzeichnet, daß die Gesamtdicke der beiden Schichten (26, 27) 20,5 bis 28 nm beträgt und die zweite Schicht weniger als 3 nm dick ist.

21. Kondensator nach einem der Ansprüche 1, 2, 19, dadurch gekennzeichnet, daß er mittels einer dielektrischen Flüssigkeit imprägniert ist.

22. Kondensator oder Elektrodenstreifen nach einem der Ansprüche 1 bis 21, dadurch gekennzeichnet, daß die erste Metallschicht (26) Aluminium und die zweite Metallschicht (27) ein Metall aus der Gruppe Eisen, Nickel und Chrom umfaßt, wobei die erste oder die zweite Metallschicht (26, 27) auf dem dielektrischen Streifen und die verbleibende Metallschicht auf der auf dem Streifen aufgebrachten Metallschicht angeordnet sind und sich die erste Schicht (26) entlang eines Randbereiches an einer Längskante des dielektrischen Streifens (11) über die zweite Schicht hinaus erstreckt.

23. Kondensator oder Elektrodenstreifen nach Anspruch 22, dadurch gekennzeichnet, daß das Aluminium der ersten Metallschicht (26) in dem Randbereich mit einer größeren Dicke als in den übrigen Bereichen der ersten Metallschicht aufgebracht ist.

24. Kondensator oder Elektrodenstreifen nach einem der Ansprüche 1 bis 23, dadurch gekennzeichnet, daß der dielektrische Streifen (11) ein synthetischer Harzstreifen mit weniger als 8 μm Dicke ist.

## Revendications

1. Condensateur électrique métallisé comprenant une paire d'électrodes espacées et une bande de matériau diélectrique entre elles, au moins l'une de ces électrodes comprenant un revêtement métallique composite sur la bande diélectrique, ce revêtement métallique composite comprenant une première et une seconde couche de différents métaux, dans lequel les épaisseurs des première et seconde couches métalliques sont choisies de sorte que pratiquement tout le courant passe par la première couche et que la tension nominale du condensateur soit adaptée à imposer une contrainte électrique élevée sur ce diélectrique, la tension nominale de ce condensateur étant adaptée à imposer une contrainte sur ce diélectrique supérieure à 39 volts par μm d'épaisseur (1000 volts par millième de pouce), cette première couche métallique (26) ayant une épaisseur inférieure à 25 nanomètres et telle que la résistivité corresponde à la gamme allant de 5 à 8 ohms par carré, la seconde couche métallique (27) étant déposée en phase vapeur à une épaisseur uniforme comprise entre 1/6 à 1/12 de l'épaisseur de la première couche et telle que la résistivité corresponde à moins de $10^{10}$ ohms par carré, le métal de la seconde couche métallique (27) ayant un point de fusion plus élevé que le métal de la première couche métallique (26).

2. Condensateur électrique métallisé selon la revendication 1, caractérisé en ce que le revêtement métallique composite est déposé en phase vapeur sur la bande diélectrique (11), la tension nominale du condensateur appartenant à la gamme allant de 370 à 660 volts alternatifs et la bande diélectrique (11) ayant une épaisseur inférieure à 8 μm de sorte que la contrainte de tension appartient à la gamme allant de 46 à 82 volts par μm d'épaisseur (1200 à 1500 volts par millième de pouce), et l'épaisseur totale de ce revêtement métallique composite (26, 27) appartenant à la gamme allant de 20,5 nm à 28 nm et la seconde couche ayant une épaisseur inférieure à 3 nm.

3. Bande d'électrode métallisée pour un condensateur électrique comprenant une bande de matériau diélectrique (11) recouverte par au moins une électrode métallique composite, cette électrode métallique composite comprenant une première (26) et une seconde couche (27) de métaux différents dans laquelle les épaisseurs de la première et seconde couche métallique sont choisies de sorte que pratiquement tout le courant passe par la première couche, cette première couche mètallique ayant une épaisseur inférieure à 25 nm et telle que la résistivité corresponde à la gamme allant de 5 à 8 ohms par carré, la seconde couche métallique étant obtenue par dépôt en phase vapeur à une épaisseur uniforme comprise entre 1/6 à 1/12 de l'épaisseur de la première couche et telle que la résistivité corresponde à moins de $10^{10}$ ohms par carré, le métal de la seconde couche métallique ayant un point de fusion plus élevé que le métal de la première couche.

4. Bande d'électrode métallisée selon la revendication 3, pour un condensateur électrique comprenant une bande diélectrique de support (11) en matériau de résine synthétique, caractérisée en ce qu'elle possède une première couche métallique (26) courvant la bande de résine synthétique et s'étendant jusqu'à un bord longitudinal de celle-ci et une seconde couche (27) continue électriquement sur la première couche métallique (26) espacée dudit bord longitudinal pour y laisser une marge nue du premier métal, l'épaisseur de la bande de résine synthétique (11) étant inférieure à 8 μm.

5. Bande d'électrode ou condensateur métallisé selon l'une des revendications 1 à 4, dans lequel les couches métalliques (26, 27) sont adjacentes l'une à l'autre.

6. Bande d'électrode ou condensateur métallisé selon l'une des revendications 1 à 3, dans lequel l'une des première et seconde couches métalliques (26, 27) est déposée directement sur la bande (11) et l'autre couche est déposée sur la couche déposée sur la bande.

7. Bande d'électrode ou condensateur métallisé selon la revendication 6, dans lequel la première couche métallique (26) est déposée directement sur la bande diélectrique (11) et la seconde couche métallique (27) est déposée sur la première couche métallique (26).

8. Bande d'électrode ou condensateur métallisé selon la revendication 6, dans lequel la seconde couche métallique (27) est déposée directement sur la bande diélectrique (11) et la première couche métallique (26) est·déposée sur la seconde couche métallique (27).

9. Bande d'électrode ou condensateur métallisé selon l'une des revendications 1 à 8, dans lequel la bande diélectrique (11) est une résine synthétique.

10. Bande d'électrode ou condensateur métallisé selon l'une des revendications 1 à 9, dans lequel la bande diélectrique (11) comprend du polypropylène.

11. Bande d'électrode ou condensateur métallisé selon l'une des revendications 1 à 10, dans lequel la première couche (26) comprend de l'aluminium.

12. Bande d'électrode ou condensateur métallisé selon l'une des revendications 1 à 11, dans lequel la seconde couche métallique (27) est prise dans la classe constituée par le fer, le nickel, le chrome.

13. Bande d'électrode ou condensateur métallisé selon l'une des revendications 1 à 11, dans lequel la première couche métallique (26) est obtenue par dépôt en phase vapeur d'aluminium de grande pureté sur une bande de résine de polypropylène, et la seconde couche métallique (27) comprend du fer déposé en phase vapeur.

14. Bande d'électrode ou condensateur métallisé selon l'une des revendications 1 à 13, dans lequel la seconde couche métallique (27) comprend du fer.

15. Bande d'électrode ou condensateur métallisé selon l'une des revendications 1 à 13, dans lequel la seconde couche métallique (27) comprend du nickel.

16. Bande d'électrode ou condensateur métallisé selon l'une des revendications 1 à 13, dans lequel la seconde couche métallique (27) contient du chrome.

17. Bande d'électrode ou condensateur métallisé selon l'une des revendications 1 à 16, dans lequel la seconde couche métallique (27) est un alliage de métaux pris dans la classe constituée par le fer, le nickel et le chrome.

18. Bande d'électrode ou condensateur métallisé selon la revendication 17, dans lequel ledit alliage comprend du nickel-chrome.

19. Condensateur électrique selon la revendication 1, comprenant une bande de diélectrique de polypropylène de support (11), caractérisé en ce que:

(a) ce condensateur possède une tension nominale adaptée à imposer une contrainte électrique à la bande diélectrique supérieure à 46 volts par micromètre d'épaisseur;

(b) la première couche métallique (26) comprend de l'aluminium;

(c) la seconde couche métallique (27) comprend au moins un métal choisi dans la classe constituée par le fer, le nickel et le chrome; et

(d) la seconde couche métallique (27) est continue électriquement et espacée d'un bord longitudinal de ladite bande pour exposer la première couche métallique sur une marge le long de ladite bande.

20. Condensateur selon la revendication 19, dans lequel l'épaisseur totale de la bicouche (26, 27) appartient à la gamme de 20,5 nm à 28 nm et la seconde couche a une épaisseur inférieur à 3 nm.

21. Condensateur selon l'une des revendications 1, 2 ou 19, dans lequel ledit condensateur est imprégné d'un fluide diélectrique.

22. Bande d'électrode ou condensateur métallisé selon l'une des revendications 1 à 21, dans lequel la première couche métallique (26) comprend de l'aluminium et la seconde couche métallique (27) comprend un métal choisi dans la classe constituée par le fer, le nickel et le chrome, l'une des première et seconde couches métalliques (26, 27) étant déposée sur la bande diélectrique et l'autre couche étant déposée sur la couche déposée sur la bande, et la première couche (26) s'étendant au-delà de la seconde couche le long d'une zone marginale située sur l'un des bords longitudinaux de la bande diélectrique (11).

23. Bande d'électrode ou condensateur métallisé selon la revendication 22, dans lequel l'aluminium de la première couche métallique (26) est déposé dans la zone marginale sur une épaisseur supérieure au reste de la première couche.

24. Bande d'électrode ou condensateur métallisé selon l'une des revendications 1 à 23, dans lequel la bande diélectrique (11) est une bande de résine synthétique ayant une épaisseur inférieure à 8 μm.

EP 0 073 555 B1

FIG.I.

FIG.2.

FIG.3.

FIG.4.

FIG.5.